# EUROPÄISCHE PATENTANMELDUNG

(11) **EP 1 795 557 A1**
(43) Veröffentlichungstag der Anmeldung: **13.06.2007**
(21) Anmeldenummer: 06024579.2
(22) Anmeldetag: 28.11.2006
(51) Int. Cl.: C08L 55/02, C08K 3/22, B07C 5/342, G01N 21/63

(54) **ABS-Formassen enthaltend Lanthanidverbindungen**

(30) Priorität: 08.12.2005 DE 102005058510
(71) Anmelder: LANXESS Deutschland GmbH, 51369 Leverkusen (DE)
(72) Erfinder: Eichenauer, Herbert, 41539 Dormagen (DE)

(57) **Zusammenfassung**

ABS-Formmassen enthaltend einen Zusatz von mindestens einer Verbindung der Lanthaniden, Verfahren zur Herstellung der Formmassen und ein Verfahren zur Identifizierung von ABS-Formmassen.

## Beschreibung

Gegenstand der Erfindung sind ABS-Formmassen enthaltend spezielle Metalloxide sowie daraus durch Spritzgießen, Extrudieren oder durch andere Verarbeitungsmethoden erhaltene Formkörper.

ABS-Formmassen sind Zweiphasenkunststoffe aus
- 1.): einem thermoplastischen Copolymerisat aus Styrol und Acrylnitril, in dem das Styrol ganz oder teilweise durch α-Methylstyrol oder Methylmethacrylat ersetzt werden kann; dieses Copolymerisat, auch als SAN-Harz oder Matrix-Harz bezeichnet, bildet die äußere Phase und
- 2.): mindestens einem Pfropfpolymerisat, welches hergestellt worden ist durch Pfropfreaktion eines oder mehrerer der unter 1. genannten Monomere auf Butadienhomo- oder -copolymerisat ("Pfropfgrundlage"). Dieses Pfropfpolymerisat ("Elastomerphase" oder "Pfropfkautschuk") bildet die disperse Phase im Matrixharz.

Die unter 1. und 2. genannten Polymerisate und ihre Mischung sind bekannt, ebenfalls Verfahren zu ihrer Herstellung (z.B. Emulsions-, Lösungs-, Masse-, Suspensions-, Fällungspolymerisation oder Kombinationen).

Bei der Herstellung von ABS-Formmassen aus den oben genannten Bausteinen 1. und 2. ist ein prinzipielles Problem, aus den Formmassen nachträglich Informationen über die eingesetzten Komponenten zu erhalten (z.B. Informationen über die Herkunft der eingesetzten Polymerkomponenten wie z.B. bei Verwendung von Bausteinen aus unterschiedlichen Produktionsanlagen oder verschiedenen Produktionsstandorten) bzw. deren Herkunft zurückzuverfolgen.

Zwar ist es im Prinzip möglich, durch Zusatz von Farbstoffen oder sonstigen organischen Komponenten zu den Polymerbausteinen und Analyse dieser Stoffe am Fertigprodukt Hinweise auf die ursprünglichen Bausteine zu erlangen, aufgrund der notwendigen hohen Zusatzmengen und den dadurch in der Praxis auftretenden Eigenschaftsveränderungen des Polymermaterials (z.B. Auftreten nicht erwünschter Verfärbungen oder schwieriger Einfärbbarkeit, Absenkung des Moduls durch Weichmachereffekt der zugesetzten organischen Verbindungen usw.) hat sich der Zusatz solcher Substanzen jedoch nicht bewährt.

Aus der DE-A 4 408 213 ist bereits bekannt, die Thermostabilität von ABS-Polymerisat-Formmassen durch Zusatz spezieller Alkali- und Erdalkalimetallverbindungen zu verbessern.

Aus DE-A 4 029 167 sind Kunststoffe mit Fluoreszenzfarbstoffen zum Sortieren von Abfällen bekannt.

Die Verwendung von Seltenerdoxiden zur Herstellung keramischer Grünkörper mit hohen Festigkeiten zur Verbesserung der mechanischen Bearbeitbarkeit ist bekannt aus der DE-A 3 737 638. Aus der WO 01/34196 A2 ist der Zusatz von Thuliumoxid in Kunststoffen, die Anwendung in der klinischen Medizin finden, bekannt, wobei Bezug genommen wird auf Polyethylen, Polyamid, Polypropylen, Polytetrafluorethylen, Polyvinylidenfluorid, Teflon, Silikon oder PMMA mit oder ohne Faseranteil wie Kohle- oder Glasfasern als Matrixmaterial.

Der Erfindung lag die Aufgabe zugrunde, ein Verfahren zu finden, aus ABS-Formmassen nachträglich Informationen über die eingesetzten Komponenten zu erhalten, insbesondere ein Verfahren zur Identifizierung von ABS-Formmassen. Weiterhin lag der Erfindung die Aufgabe zugrunde, entsprechende ABS-Formmassen zu Verfügung zu stellen.

Gegenstand der Erfindung sind ABS-Formmassen enthaltend einen Zusatz von mindestens einer Verbindung der Lanthaniden.

Unter Lanthaniden werden hierbei Lanthan und die vierzehn auf das Lanthan folgenden Elemente verstanden. Diese werden auch als Seltenerdmetalle bezeichnet. Besonders bevorzugte Verbindungen der Lanthaniden sind deren Oxide.

Bevorzugt sind ABS-Formmassen enthaltend Kombinationen aus mindestens zwei verschiedenen Metalloxiden ausgewählt aus Oxiden der Lanthaniden.

Bevorzugte Oxide sind Lanthanoxid (La₂O₃), Ceroxid (CeO₂), Praseodymoxid (Pr₆O₁₁, Pr₂O₃), Neodymoxid (Nd₂O₃), Samariumoxid (Sm₂O₃), Gadoliniumoxid (Gd₂O₃), Dysprosiumoxid (Dy₂O₃), Erbiumoxid (Er₂O₃), Ytterbiumoxid (Yb₂O₃).

Besonders bevorzugte Oxide sind Lanthanoxid, Ceroxid, Praseodymoxid, Gadoliniumoxid, Dysprosiumoxid.

Die erfindungsgemäß einzusetzenden Verbindungen können in Form von Pulvern, in Form von Nanopartikeln, in Form von in Wasser dispergierten Teilchen, vorzugsweise in Form von dispergierten Nanoteilchen, eingesetzt werden.

Dabei beträgt die in den Formmassen enthaltene Gesamtmenge an Verbindungen der Lanthaniden vorzugsweise 0,01 bis 1000 ppm, besonders bevorzugt 0,1 bis 100 ppm und ganz bevorzugt 1 bis 50 ppm.

Die den einzelnen bei der ABS-Herstellung eingesetzten Komponenten (Pfropfkautschuke, Thermoplastharze) zugesetzten Mengen an Verbindungen der Lanthaniden werden vorzugsweise so gewählt, dass in Summe die oben genannten Gesamtmengen resultieren. Dabei kann es vorteilhaft sein, die Zusatzmengen proportional den Einsatzmengen der einzelnen Komponenten zuzufügen.

Die ABS-Formmassen können als solche vorliegen, aber auch als sogenanntes Blend, insbesondere mit Polyamid, Polycarbonat und/oder Polybutylenterepthalat. Besonders bevorzugte Polyamid-Blends enthalten auf 100 Gew.Teile ABS 100 bis 250 Gew.-Teile Polyamid. Weiterhin zeichnen sie sich vorzugsweise aus durch gute Verarbeitbarkeit und hohe Beständigkeit bei Temperaturbelastung.

Besonders bevorzugte Polycarbonat-Blends enthalten auf 100 Gew.Teile ABS 25 bis 400 Gew.-Teile Polycarbonat. Weiterhin zeichnen sie sich vorzugsweise aus durch eine Kombination aus hoher Wärmeformbeständigkeit und guter Zähigkeit.

Besonders bevorzugte Polybutylenterephthalat-Blends enthalten auf 100 Gew.Teile ABS 50 bis 500 Gew.-Teile Polybutylenterephthalat. Weiterhin zeichnen sie sich vorzugsweise aus durch gute Zähigkeit und hohe Chemikalienbeständigkeit.

Die Vermischung der zum Aufbau der ABS-Formmassen eingesetzten Komponenten mit den Verbindungen der Lanthaniden kann auf verschiedene Weisen erfolgen.

So kann die Vermischung mit Pfropfkautschukkomponenten (bei deren Synthese durch Emulsionspolymerisation) durch Zugabe einer wässrigen Dispersion der Lanthaniden-Verbindung-Komponente zum Pfropfkautschuklatex und gemeinsame Aufarbeitung durch Ausfällung und Trocknung erfolgen.

Zur Einarbeitung der Lanthaniden-Verbindung-Komponente in Feststoffe wie Pfropfkautschukpulver oder Granulat von Harzkomponenten hat sich das Eincompoundieren auf üblichen Compoundieraggregaten (z.B. Schneckenmaschinen, Innenkneter) bewährt.

Die Ermittlung der in den ABS-Formmassen enthaltenen Verbindungen der Lanthaniden kann durch übliche analytische Methoden erfolgen. Besonders geeignet, da eine sehr hohe Nachweisgenauigkeit erreicht wird, ist die ICP-AES-OES-Methode (induktiv gekoppeltes Plasma mit optischer Emissionsspektroskopie, vgl. z.B. http://icp-oes.com und dort zitierte Literatur).

ICP-AES steht für engl. inductive coupled plasma atomic (optical) emission spectroscopy. Die Methode des induktiv gekoppelten Plasmas beruht auf der Verwendung eines sehr heißen (ca. 10000K) Argonplasmas zur Anregung der optischen Emission der zu analysierenden Elemente. Die Energieübertragung erfolgt dabei nach der Zündung durch einen Teslafunken durch das in den Spulen anliegende Hochfrequenzfeld. Freie Elektronen werden nun durch das anliegende Feld beschleunigt und heizen durch Kollision mit den Atomrümpfen das Plasma auf. Bedingt durch die hohe Teilchendichte im Plasma erhitzen sich Plasma und Probenaerosol auf 6000-10000K. Das Probenaerosol wird dabei durch die Mitte des Plasmastromes geleitet, ohne dessen Stabilität/Gleichgewicht zu beeinflussen. Die wichtigsten Teile eines ICP-Spektrometer sind Hochfrequenzgenerator, Plasmafackel, Probenzerstäuber und das eigentliche Spektrometer.

Bevorzugte ABS-Formmassen bzw. ABS-Polymerisate im Sinne der Erfindung enthalten 5 bis 100 Gew.-%, vorzugsweise 10 bis 80 Gew.-%, mindestens eines Pfropfpolymerisats und 95 bis 0 Gew.-%, vorzugsweise 90 bis 20 Gew.-%, mindestens eines thermoplastischen Copolymerharzes.

Pfropfpolymerisate in Sinne der Erfindung sind solche, in denen auf einen Kautschuk Styrol oder Methylmethacrylat oder eine Mischung von 95 bis 50 Gew.-% Styrol, α-Methylstyrol, kemsubstituiertem Styrol, Methylmethacrylat oder Mischungen daraus und 5 bis 50 Gew.-% Acrylnitril, Methacrylnitril, Maleinsäureanhydrid, N-substituierte Maleinimide oder Mischungen daraus pfropfpolymerisiert sind. Geeignete Kautschuke sind praktisch alle Kautschuke mit Glasübergangstemperaturen ≤ 10°C, z.B. Polybutadien, Styrol-Butadien-Polymerisate, Acrylnitril-Butadien-Polymerisate, Polyisopren, Acrylatkautschuke wie z.B. Poly-n-butylacrylat. Die Alkylacrylatkautschuke können gegebenenfalls bis zu 30 Gew.-% (bezogen auf Kautschukgewicht) Monomere wie Vinylacetat, Acrylnitril, Styrol, Methylmethacrylat und/oder Vinylether copolymerisiert enthalten. Die Acrylatkautschuke können weiterhin kleinere Mengen, vorzugsweise bis zu 5 Gew.-% (bezogen auf Kautschukgewicht) vernetzend wirkender ethylenisch ungesättigter Monomerer einpolymerisiert enthalten. Solche Vernetzer sind z.B. Alkylendioldiacrylate, und -methacrylate, Polyesterdiacrylate und -methacrylate, Divinylbenzol, Trivinylbenzol, Triallylcyanurat, Allylacrylat und -methacrylat, Butadien oder Isopren.

Pfropfgrundlage können auch Acrylatkautschuke mit Kern/Mantel-Struktur sein, mit einem Kern aus vernetztem Dienkautschuk aus einem oder mehreren konjugierten Dienen, wie Polybutadien, oder ein Copolymerisat eines konjugierten Diens mit einem ethylenisch ungesättigten Monomer wie Styrol und/oder Acrylnitril.

Weitere geeignete Kautschuke sind z.B. die sogenannten EPDM-Kautschuke (Polymerisate aus Ethylen, Propylen und einem nichtkonjugierten Dien wie z.B. Dicyclopentadien), EPM-Kautschuke (Ethylen/Propylen-Kautschuke) und Silikonkautschuke, die gegebenenfalls ebenfalls eine Kern/Schalen-Struktur aufweisen können. Bevorzugt sind Polybutadien und Alkylacrylatkautschuke.

Die Pfropfpolymerisate enthalten 10 bis 95 Gew.-%, insbesondere 20 bis 70 Gew.-%, Kautschuk und 90 bis 5 Gew.-%, insbesondere 80 bis 30 Gew.-% pfropfcopolymerisierte Monomere. Die Kautschuke liegen in diesen Pfropfpolymerisaten in Form wenigstens partiell vernetzter Teilchen eines mittleren Teilchendurchmessers (d₅₀) von 0,05 bis 20 µm, bevorzugt von 0,1 bis 2 µm und besonders bevorzugt 0,1 bis 0,8 µm vor.

Derartige Pfropfcopolymerisate können durch radikalische Pfropfcopolymerisation von Monomeren aus der Reihe Styrol, α-Methylstyrol, kernsubstituiertem Styrol, (Meth)Acrylnitril, Methylmethacrylat, Maleinsäureanhydrid, N-substituiertes Maleinimid in Gegenwart der zu pfropfenden Kautschuke hergestellt werden. Bevorzugte Herstellverfahren für solche Pfropfcopolymerisate sind die Emulsions-, Lösungs-, Masse- oder Suspensionspolymerisation.

Die thermoplastischen Copolymerisate können aus den Pfropfmonomeren oder ähnlichen Monomeren aufgebaut sein, insbesondere aus wenigstens einem Monomeren aus der Reihe Styrol, α-Methylstyrol, Halogenstyrol, Acrylnitril, Methacrylnitril, Methylmethacrylat, Maleinsäureanhydrid, Vinylacetat, N-substituiertes Maleinimid .

Es handelt sich bevorzugt um Copolymerisate aus 95 bis 50 Gew.-% Styrol, α-Methylstyrol, Methylmethacrylat oder Mischungen daraus mit 5 bis 50 Gew.-% Acrylnitril, Methacrylnitril, Methylmethacrylat, Maleinsäureanhydrid, N-Phenylmaleinimid oder Mischungen daraus. Solche Copolymerisate entstehen auch bei der Pfropfcopolymerisation als Nebenprodukte. Es ist üblich, neben den im Pfropfpolymerisat enthaltenen Copolymeren noch getrennt hergestellte Copolymere zuzumischen.

Diese müssen nicht mit den in den Pfropfpolymeren vorliegenden ungepfropften Harzanteilen chemisch identisch sein. Geeignete getrennt hergestellte Copolymere sind harzartig, thermoplastisch und kautschukfrei; es sind insbesondere Copolymere aus Styrol und/oder α-Methylstyrol mit Acrylnitril, gegebenenfalls in Mischung mit Methylmethacrylat.

Besonders bevorzugte Copolymerisate bestehen aus 20 bis 40 Gew.-% Acrylnitril und 80 bis 60 Gew.-% Styrol oder α-Methylstyrol. Solche Copolymerisate sind bekannt und lassen sich insbesondere durch radikalische Polymerisation, insbesondere durch Emulsions-, Suspensions-, Lösungs- oder Massepolymerisation herstellen. Die Copolymerisate besitzen vorzugsweise Molekulargewichte *M̅*_{w} von 15000 bis 200000.

Die erfindungsgemäßen Formmassen enthalten mindestens ein ABS-Polymerisat und mindestens ein Metalloxid ausgewählt aus Oxiden der Lanthaniden in Mengen von 0,01 bis 1000 ppm, vorzugsweise von 0,1 bis 100 ppm und besonders bevorzugt von 1 bis 50 ppm (jeweils bezogen auf ABS-Polymerisat).

Neben den erfindungsgemäß einzusetzenden Verbindungen können die Formmassen übliche Zusätze wie Pigmente, Füllstoffe, Stabilisatoren, Antistatika, Gleitmittel, Entformungsmittel, Flammschutzmittel enthalten.

Gegenstand der Erfindung ist auch ein Verfahren zur Herstellung der erfindungsgemäßen ABS-Polymerisat-Formmassen enthaltend mindestens eine Verbindung der Lanthaniden.

Dazu gibt man 0,01 bis 1000 ppm, vorzugsweise 0,1 bis 100 ppm und besonders bevorzugt von 1 bis 50 ppm (jeweils bezogen auf ABS-Formmasse), mindestens einer Verbindung der Lanthaniden zu mindestens einem der oben beschriebenen ABS-Polymerisate und vermischt bei höheren Temperaturen, insbesondere bei 100°C bis 280°C in üblichen Mischaggregaten, z.B. Knetern, Innenmischern, auf Walzenstühlen, Schneckenmaschinen oder Extrudern.

Dabei können Verweilzeiten je nach Intensität der Durchmischung von 10 Sekunden bis 30 Minuten erforderlich sein.

Alternativ kann die Vermischung bei der Herstellung des ABS-Pfropfpolymerisats durch das Verfahren der Emulsionspolymerisation auch durch Zugabe einer wässrigen Dispersion der Lanthaniden-Verbindung-Komponente zum Pfropfkautschuklatex und gemeinsame Aufarbeitung erfolgen.

### Beispiele

Eingesetzte Polymerisate:
- A): Pfropfprodukt, bestehend aus 55 Gew.-% Polybutadien mit einem mittleren Teilchendurchmesser (d₅₀) von 260 nm, auf das 32,85 Gew.-% Styrol und 12,15 Gew.-% Acrylnitril gepfropft wurden.
- B): Styrol/Acrylnitril (SAN) = 72 : 28-Copolymerisat mit einem mittleren Molekulargewicht (Gewichtsmittel) *M̅* _{w} von ca. 85 000 und einer molekularen Uneinheitlichkeit *M̅* _{w} / *M̅* ₙ -1 < 2.

Eingesetzte Metalloxide :
- I): Lanthanoxid (La₂O₃), Acros
- II): Ceroxid (CeO₂), Aldrich
- III): Zinnoxid (SnO₂), Vergleichsmaterial, Sigma-Aldrich

### Beispiele 1 bis 6

Die in Tabelle 1 angegebenen Mengen und Typen Metalloxid wurden zusammen mit 30 Gew.-Teilen Pfropfprodukt A), 70 Gew.-Teilen SAN-Harz B), 0,15 Gew.-Teilen eines Silikonöls, 2 Gew.-Teilen Ethylendiaminbisstearylamid und 6,7 Gew.-Teilen Titandioxid (TiO₂) als Weißpigment bei 180°C bis 200°C in einem Innenkneter vermischt. Das resultierende Gemisch wurde granuliert und daran nach Mineralisierung mit einem Schwefelsäure/Salpetersäure-Gemisch der Gehalt an Metalloxid durch ICP-OES (Messgerät : Optima 3300 XL der Firma Perkin Elmer) ermittelt.

Wie die Messwerte in Tabelle 1 zeigen, werden die eingesetzten Metalloxide der Lanthaniden mit sehr hoher Genauigkeit wiedergefunden. Dabei sind auch keine Störungen durch die Gegenwart anderer Metalloxide, insbesondere das als Weißpigment im großen Umfang eingesetzte Titandioxid, zu erkennen.

**Tabelle 1 : Typ und Zusatzmenge der Metalloxide**

| Eingesetzte Metalloxidmenge | | | | Wiedergefundene Metalloxidmenge | | |
|---|---|---|---|---|---|---|
| Beispiel | La₂O₃ [ppm] | CeO₂ [ppm] | SnO₂ [ppm] | La₂O₃ [ppm] | CeO₂ [ppm] | SnO₂ [ppm] |
| 1 | 10 | -- | -- | 9 | -- | -- |
| 2 | -- | 10 | -- | -- | 8 | -- |
| 3 | 10 | -- | 20 | 9 | -- | 13 |
| 4 | -- | 10 | 20 | -- | 10 | 13 |
| 5 | 10 | 10 | 20 | 9 | 9 | 13 |
| 6 (Vergleich) | -- | -- | -- | <1 | <1 | 3 |

### Beispiele 7 und 8

i) 0,005 Gew.-Teile La₂O₃ und 100 Gew.-Teile Pfropfprodukt A) werden in einem Innenkneter homogen vermischt.
ii) 0,003 Gew.-Teile CeO₂ und 100 Gew.-Teile SAN-Copolymerisat B) werden in einem Innenkneter homogen vermischt.

Danach werden die nach i) und ii) vorliegenden Mischungen im Verhältnis i) : ii) = 30 : 70 (Beispiel 7) bzw. i) : ii) = 50 : 50 (Beispiel 8) analog den Beispielen 1 bis 6 in einem Innenkneter vermischt.

Die Messung der Gehalte an Metalloxiden nach der oben beschriebenen Methode ergab 14 ppm La₂O₃ und 20 ppm CeO₂ für das Produkt gemäß Beispiel 7 und 23 ppm La₂O₃ und 15 ppm CeO₂ für das Produkt gemäß Beispiel 8.

Auch hier werden die Metalloxide mit hoher Genauigkeit wiedergefunden.

## Patentansprüche

1. ABS-Formmassen enthaltend einen Zusatz von mindestens einer Verbindung der Lanthaniden.

2. ABS-Formmassen nach Anspruch 1, **dadurch gekennzeichnet, dass** wenigstens eine Verbindung ein Oxid ist.

3. ABS-Formmassen gemäß wenigstens einem der vorhergehenden Ansprüche, **dadurch gekennzeichnet, dass** sie eine Kombination aus mindestens zwei verschiedenen Verbindungen der Lanthaniden enthalten.

4. ABS-Formmassen gemäß wenigstens einem der vorhergehenden Ansprüche, **dadurch gekennzeichnet, dass** die Verbindungen ausgewählt sind aus Lanthanoxid, Ceroxid, Praseodymoxid, Neodymoxid, Samariumoxid, Gadoliniumoxid, Dysprosiumoxid, Erbiumoxid, Ytterbiumoxid.

5. ABS-Formmassen gemäß wenigstens einem der vorhergehenden Ansprüche, **dadurch gekennzeichnet, dass** die Gesamtmenge an Verbindungen der Lanthaniden 0,01 bis 1000 ppm beträgt.

6. ABS-Formmassen gemäß wenigstens einem der vorhergehenden Ansprüche, **dadurch gekennzeichnet, dass** die Gesamtmenge an Verbindungen der Lanthaniden 0,1 bis 100 ppm beträgt.

7. ABS-Formasse gemäß wenigstens einem der vorhergehenden Ansprüche, **dadurch gekennzeichnet, dass** sie als Blend insbesondere mit Polyamid, Polycarbonat und/oder Polybutylenterephthalat vorliegt.

8. Verfahren zur Herstellung von ABS-Formmassen gemäß wenigstens einem der vorhergehenden Ansprüche, **dadurch gekennzeichnet, dass** man 0,01 bis 1000 ppm (bezogen auf ABS-Formmasse) mindestens einer Verbindung der Lanthaniden zu einem ABS-Polymerisat gibt und bei einer Temperatur von 100°C bis 200°C innig vermischt.

9. Geformte Körper oder Granulate erhältlich aus Formmassen gemäß wenigstens einem der Ansprüche 1 bis 7.

10. Verfahren zur Identifizierung von ABS-Formmassen, **dadurch gekennzeichnet, dass** man der Formmasse wenigstens eine Verbindung der Lanthaniden, vorzugsweise in einer Menge von 0,01 bis 1000 ppm pro Gesamtmenge ABS zusetzt, die Formmasse gegebenenfalls weiter verarbeitet, und die Menge der Lanthaniden spektroskopisch analysiert.
